Europäisches Patentamt

(19) European Patent Office

Office européen des brevets

(11) Veröffentlichungsnummer: **0 261 269**
**B1**

(12) **EUROPÄISCHE PATENTSCHRIFT**

(45) Veröffentlichungstag der Patentschrift:
**23.11.89**

(51) Int. Cl.⁴: **A01B 33/06, A01B 33/12**

(21) Anmeldenummer: **86113179.5**

(22) Anmeldetag: **25.09.86**

(54) **Kreiselegge.**

(43) Veröffentlichungstag der Anmeldung:
**30.03.88 Patentblatt 88/13**

(45) Bekanntmachung des Hinweises auf die Patenterteilung:
**23.11.89 Patentblatt 89/47**

(84) Benannte Vertragsstaaten:
**AT CH DE FR GB IT LI NL**

(56) Entgegenhaltungen:
**EP-A- 0 081 600**
**DE-U- 8 229 859**
**GB-A- 2 130 862**
**US-A- 4 088 083**

(73) Patentinhaber: **Rabewerk Heinrich Clausing, D-4515 Bad Essen 1(DE)**

(72) Erfinder: **Warnking, Richard, Dipl.-Ing., Klockenpatt 5, D-4515 Bad Essen 1(DE)**

(74) Vertreter: **Patentanwälte Dipl.-Ing. R. Schlee Dipl.-Ing. A. Missling, Bismarckstrasse 43, D-6300 Giessen(DE)**

ACTORUM AG

## Beschreibung

Die Erfindung bezieht sich auf eine Kreiselegge gemäß dem Oberbegriff von Anspruch 1.

In der US-A 4 088 083 ist eine Kreiselegge beschrieben, der ein Grubberbalken vorgeordnet und eine Verdichtungswalze nachgeordnet ist. Auf gleicher Bodenhöhe mit letzterer sind außen an der Kreiseleggen-Einheit Seitenschilde vorgesehen, deren Vorderteil relativ zu dem Maschinenrahmen höhenveränderlich ist. Die Schilde sind einwärts gewölbt und decken lediglich die Stirnseiten der Kreiseleggen-Einheit ab, welche zu der Nachlaufwalze hin offen, also nicht wirksam durch eine Abschirmung geschützt ist. Vor der Nachlaufwalze befindet sich zwar eine geneigte Führungsleiste, welche gelockerten Boden nach unten umlenken soll, doch wird dadurch ein Ausschleudern von Brocken, Steinen und dergleichen nach vorn in den Kreiselbereich eher unterstützt als verhindert.

Bei der Arbeit mit derartigen Kreiseleggen auf steinigen Böden entstehen häufig Probleme gerade dadurch, daß Steine zwischen die Werkzeugträger und den Raum zwischen den Werkzeugträgern und dem Gestell gelangen. Beispielsweise kann die Nachlaufwalze Steine nach oben mitnehmen und in Richtung der Werkzeugträger abschleudern. Dies kann zum Blockieren der Maschine und zu Beschädigungen führen. Es sind deshalb Abschirmungen geschaffen worden, mit denen das Eindringen von Steinen in den Bereich der Werkzeugträger verhindert werden soll.

Bei einer bekannten Kreiselegge der eingangs genannten Art (DE-U 8 229 859 ist eine Schutzwand Bestandteil eines Schutzkastenteiles, der als Wartungsklappe ausgebildet und deshalb leicht abnehmbar ist. Dadurch ist der Raum innerhalb des Schutzkastens leicht zugänglich, so daß eventuell eingedrungene Steine sich wieder entfernen lassen. Auch können Zinkenbefestigungen vorgesehen werden, die mittels durch den Werkzeugträger hindurchgesteckter Schrauben mit diesem verbunden sind. Ein geschlossener Schutzkasten hat jedoch den Nachteil, daß einmal eingedrungene Steine den Kasteninnenraum kaum von selber verlassen und daß eine Betriebsunterbrechung nötig ist, um Steine zu entfernen. Dies ist auch dann ungünstig, wenn ein Teil des Kastens als Wartungsklappe ausgebildet ist.

Der Erfindung liegt die Aufgabe zugrunde, eine Kreiselegge der eingangs genannten Art so auszubilden, daß Steine, die trotz wirksamer Abschirmung der Werkzeugträger hin und wieder in deren Bereich gelangen, diesen Raum ohne Betriebsunterbrechung wieder verlassen können.

Hauptmerkmale der Erfindung sind im kennzeichnenden Teil von Anspruch 1 angegeben. Ausgestaltungen sind Gegenstand der Ansprüche 3 bis 8.

Nach der Erfindung ist die Schutzwand in einzelne Schilde aufgelöst, welche die Nachbarschaftsbereiche nur solcher Kreisel abschirmen, in denen sich die Werkzeuge nach vorne bewegen. Mithin werden bei der erfindungsgemäßen Kreiselegge allein solche Bereiche abgeschirmt, in denen durch die Rotation der Kreisel sozusagen eine Einziehwirkung entsteht. wodurch Steine zwischen die Werkzeugträger und in den Raum zwischen den Werkzeugträgern und dem Gestell gefördert werden können. Andere Bereiche hingegen, in denen die Rotation der Kreisel einen Auswurfeffekt hat, sind frei von einer Abschirmung. Auf überraschend einfache Weise wird so erreicht, daß gelegentlich trotz der Abschirmung eindringende Steine rasch wieder ausgeworfen werden, so daß Betriebsstörungen durch Einklemmen von Steinen nicht zu befürchten sind.

Im allgemeinen sind Kreiseleggen so konstruiert, daß die äußeren Kreisel einen solchen Drehsinn haben, daß im äußeren Bereich der Werkzeug-Umlaufbahnen die Werkzeugbewegung nach vorne gerichtet ist. Dadurch wird vermieden, daß von vorne her Steine zwischen die äußeren Kreisel und diesen benachbarte Seitenabdeckungen (Schutzschilde) eingeklemmt werden. Gemäß der im Anspruch 2 angegebenen Weiterbildung der Erfindung sind Schilde (Außenschilde) auch an den Enden der Kreiselreihe angeordnet. Man vermeidet dadurch das Einziehen von Steinen zwischen äußere Kreisel und Seitenabdeckung von hinten her.

Gemäß einer weiteren Ausgestaltung der Erfindung (Anspruch 3) gehen die Schilde in eine horizontale Schutzwand über, die nahe an die Umlaufbahn der Werkzeugträger heranreicht. Man verhindert dadurch auch das Einziehen von Steinen von unter her. Diese bewegliche horizontale Schutzwand kann auch über die gesamte Breite der Kreiselegge zusammenhängen (Anspruch 4). Diese Ausführungsform ist besonders dann vorteilhaft, wenn zwischen Kreiseln und Nachlaufwalze eine Planierschiene angeordnet ist (Anspruch 5). Eine solche Planierschiene nämlich hat die Wirkung, daß sie eine Art Erdwall vor sich herschiebt, in dem Steine enthalten sein können. Die Steine können aus einem solchen Erdwall besonders leicht zwischen die Werkzeugträger eindringen. Dem wird jedoch durch eine zusammenhängende Schutzwand gut vorgebeugt.

Geeignete Breiten für die Schutzschilde sind im Anspruch 6 angegeben. Im allgemeinen beträgt der Abstand zwischen zwei Kreiselwellen ca. 25 cm, jedoch sind auch andere Kreiselabstände möglich. Es ist zweckmäßig, die Schildbreite in Beziehung zum Kreiselabstand zu setzen, d.h. die Schilde werden in der Regel bei kleinem Kreiselabstand schmäler sein als bei großem Kreiselabstand. Die Breite der Schilde muß nicht über die gesamte Höhe gleichbleibend sein. Vorteilhaft ist es, die unteren Bereiche breiter zu halten als die oberen, da hiermit ohne Nachteil für die Abschirmwirkung Material gespart werden kann.

Wenn, wie meist üblich, das längliche Gestell als Kastenbalken ausgebildet ist, wird gemäß Anspruch 8 empfohlen, die Schilde mit waagerechten Befestigungsschenkeln am Deckel-Befestigungsflansch des Kastenbalkens anzuschrauben.

In der Zeichnung sind Ausführungsbeispiele der Erfindung dargestellt. Es zeigen:

Fig. 1 eine Seitenansicht einer Kreiselegge,
Fig. 2 eine Draufsicht auf die Kreiselegge entsprechend dem Pfeil II in Fig. 1, wobei jedoch Fig. 2 gegenüber der klapprichtigen Lage um 90° im Uhrzeigersinn verdreht ist,

Fig. 3 eine teilweise Seitenansicht einer Kreiselegge gemäß einer zweiten Ausführungsform der Erfindung,

Fig. 4 eine teilweise Seitenansicht einer Kreiselegge gemäß einer dritten Ausführungsform der Erfindung,

Fig. 5 einen teilweise Horizontalschnitt nach Linie V-V in Fig. 4,

Fig. 6 eine der Fig. 5 entsprechende Darstellung einer vierten Ausführungsform der Erfindung,

Fig. 7 eine teilweise Seitenansicht einer Kreiselegge gemäß einer fünften Ausführungsform der Erfindung,

Fig. 8 eine teilweise Seitenansicht einer Kreiselegge gemäß einer sechsten Auführungsform der Erfindung,

Fig. 9 eine teilweise Seitenansicht einer Kreiselegge gemäß einer siebten Ausführungsform und

Fig.10 einen teilweisen Horizontalschnitt nach Linie X-X in Fig. 9.

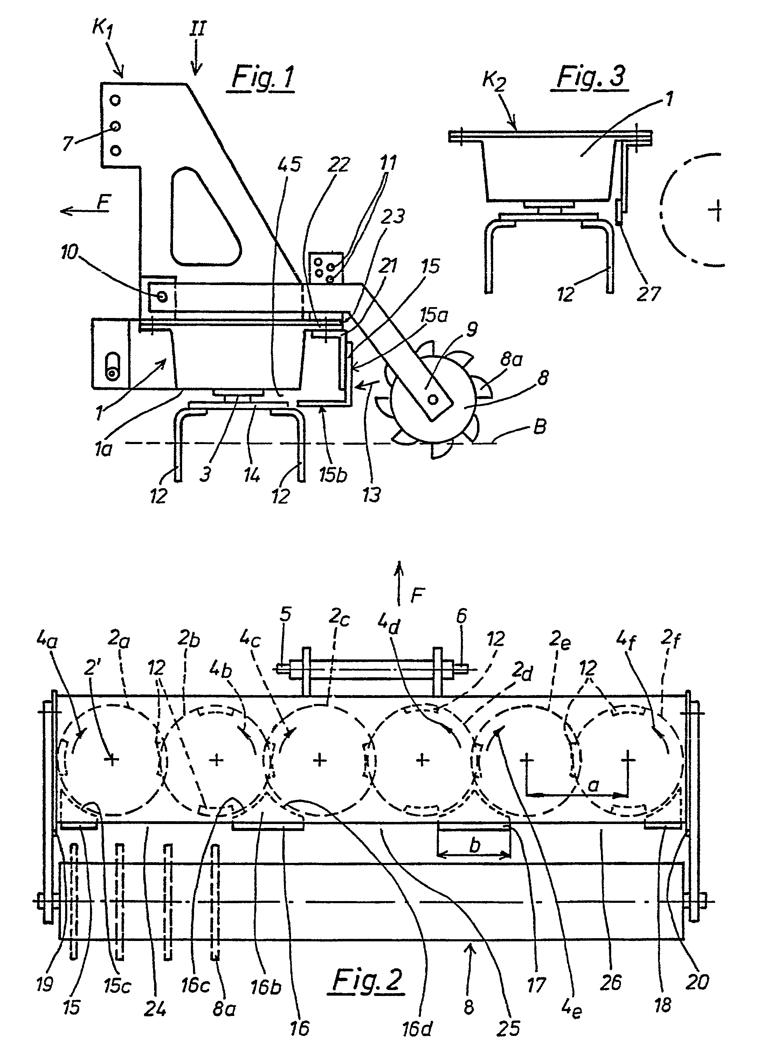

Die Kreiselegge K₁ nach den Fig. 1 und 2 hat ein längliches Gestell 1, in dem insgesamt sechs Kreisel 2a bis 2f gelagert sind. Die Kreisel 2 haben senkrechte Drehachsen 2'. Die Kreiselwellen sind dadurch antriebsmäßig miteinander verbunden, da auf jeder Kreiselwelle ein Stirnzahnrad drehfest befestigt ist, das mit dem Stirnzahnrad des benachbarten Kreisels kämmt. Ein Kreisel ist an ein in der Zeichnung nicht dargestelltes Getriebe angekuppelt, das wiederum über eine Gelenkwelle mit der Zapfwelle eines Schleppers gekuppelt ist. Benachbarte Kreisel rotieren gegensinnig, was in Fig. 2 durch Drehrichtungspfeile 4a bis 4f angedeutet ist. Am Gestell 1 befinden sich Ankupplungsstellen 5, 6, 7 für den Anbau der Kreiselegge K₁ an einen Schlepper.

Hinter der Reihe aus Kreiseln 2a bis 2f ist eine Nachlaufwalze 8 angeordnet, im dargestellten Fall eine sogenannte Zahnwalze, die mit Zähnen 8a besetzt ist. Die Walze 8 ist an ihren Enden in Armen 9 drehbar gelagert. Die Arme 9 sind um Schwenkpunkte 10 verschwenkbar und in verschiedenen Höhenlagen feststellbar (Haltebolzenlöcher 11), wodurch die Arbeitstiefe, d.h. die Eingriffstiefe der an den Kreiseln 2a bis 2f befestigten Werkzeuge 12 in den Boden B bestimmt werden kann.

Bei der Bearbeitung steiniger Böden können an der Walze 8 zunächst Steine anhaften und nach oben mitgenommen werden. Die Steine können dann entsprechend dem Pfeil 13 abgeschleudert werden und würden ohne besondere Vorkehrungen zwischen die Kreisel geschleudert. Jeder Kreisel 3 hat einen Werkzeugträger 14, der als Kreisscheibe oder als Balken ausgebildet sein kann. An jedem Werkzeugträger 14 sitzen zwei Werkzeuge 12, die einander diametral gegenüberstehen.

Zum Schutz der Werkzeugträger 14 und auch der Unterseite 1a des Gestells 1 sind erfindungsgemäß Schilde 15 bis 18 vorgesehen, wobei die Schilde 15 und 18 als Außenschilde bezeichnet werden sollen.

Der Schild 16 ist im Bereich hinter den Kreiseln 2b, 2c angeordnet. Wie die Drehrichtungspfeile 4b, 4c zeigen, bewegen sich die Kreisel in den Bahnbereichen, in denen sie benachbart sind, nach vorne. Entsprechend ist der Schild 17 hinter den Kreiseln 2d, 2e angeordnet. Auch bei diesen Kreiseln bewegen sich die Werkzeuge 12 in den benachbarten Bereichen der Kreisel nach vorne. Im Bereich hinter den Kreiseln 2a/2b, 2c/2d und 2e/2f hingegen sind keine Schilde angeordnet. In den Nachbarschaftsbereichen dieser Kreisel bewegen sich die Werkzeugträger und damit die Werkzeuge nach hinten. Zur Klarstellung wird bemerkt, daß sich "hinten" und "vorn" auf die Fahrtrichtung F beziehen. Was in Fahrtrichtung F weist, liegt vorne.

Der linke äußere Kreisel 2a bewegt sich im Nachbarschaftsbereich einer Seitenabdeckung 19 (Seitenschild) nach vorne. Dieser Nachbarschaftsbereich ist durch den Außenschild 15 abgedeckt. Der Nachbarschaftsbereich zur rechten Seitenabdeckung 20 ist durch einen weiteren Außenschild 18 abgedecht.

Zur Befestigung der Schilde 16, 17 sind Winkel 21 vorgesehen, die an einem Flansch 22 des als Kastenbalken ausgebildeten Gestells angeschraubt ist. Der Flansch 22 dient zugleich zur Befestigung eines Deckels 23 des Kastenbalkens. Jeder Schild (in Fig. 1 ist der Außenschild 15 zu sehen) ist als winkelförmiges Blech ausgebildet und hat einen vertikalen Teil 15a und einen horizontalen Teil 15b. Der horizontale Teil 15b hat einen bogenförmigen Rand 15c, der nahe an den kreisscheibenförmigen Werkzeugträger 14 des Kreisels 2a heranreicht.

Die Schilde 16, 17 können sozusagen als Verdoppelung der Außenschilde 15, 18 aufgefaßt werden. Die Schilde 16, 17 sind gleich ausgebildet, weshalb die Beschreibung eines der Schilde genügt. Der waagerechte Teil 16b hat die Form eines Zwickels. Kreisbogenförmige Endflächen 16c, 16d sind konzentrisch zu den Werkzeugträgern 14 und haben einen nur kleinen Abstand davon. Der Außenschild 18 ist spiegelbildlich zum Außenschild 15.

Die Breite b der Schilde 16, 17 ist etwa gleich dem Achsabstand a zwischen zwei Kreiseln. Dadurch wird der Bereich, in dem Steine leicht eingezogen werden könnten, gut abgeschirmt. Die Breite der Außenschilde 15, 18 ist etwa halb so groß wie die Breite der Schilde 16, 17.

Die Schilde 15 bis 18 schützen diejenigen Bereiche, in den die Gefahr des Einziehens von Steinen besonders groß ist. Sollten doch Steine zwischen die Werkzeugträger und in den Raum 45 zwischen der Unterseite 1a des Gestells und der Oberseite der Werkzeugträger 14 gelangen, so können die Kreisel solche Steine im Bereich 24 zwischen den Schilden 15, 16, im Bereich 25 zwischen den Schilden 16, 17 und im Bereich 26 zwischen den Schilden 17, 18 rasch wieder nach hinten auswerfen.

Die Kreiselegge K₂ nach Fig. 3 hat ebenfalls ein Gestell 1 in Form eines Kastenbalkens. Auch an dieser Kreiselegge sind Schilde 27 angeordnet, und zwar so wie die vertikalen Teile der Schilde 15 bis 18 bei dem bereits beschriebenen Ausführungsbeispiel. Die Schilde 27 haben keine horizontalen Teile, reichen jedoch tiefer als die Schilde 15 bis 18, nämlich bis in den Bereich der Werkzwuge 12.

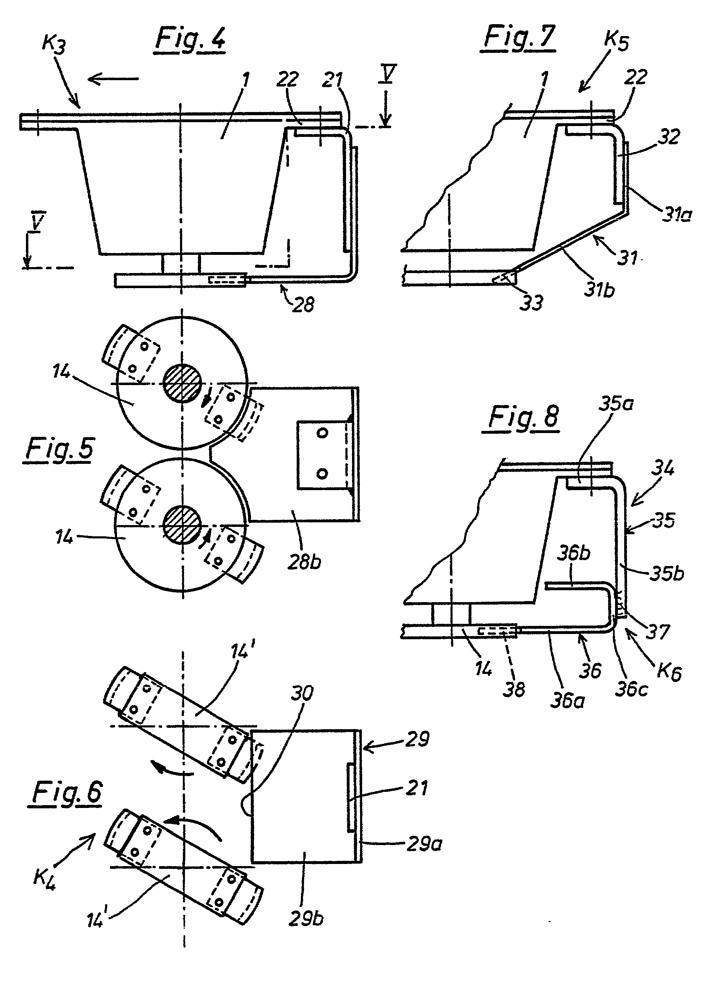

Die Kreiselegge K₃ nach den Fig. 4 und 5 hat wieder ein als Kastenbalken ausgebildetes Gehäuse 1. Am Flansch 22 des Gehäuse-Unterteiles sind ebenfalls Halten 21 für Schilde 28 befestigt. Die Schilde 28 unterscheiden sich von den Schilden 16, 17 nur dadurch, daß der horizontale Teil 28b länger ausgebildet ist als bei ker Kreiselegge K₁. Die Kreiselegge K₄ hat mittels Haltern 21 befestigte Schilde 29, die einen vertikalen Teil 29a und einen horizontalen Teil 29b aufweisen. Der horizontale Teil 29b unterscheidet sich von dem horizontalen Teil 28b dadurch, daß seine Vorderkante 30 gerade ausgebildet ist. Der horizontale Teil hat also nicht die Form eines Zwickels, wie bei den Kreiseleggen K₁ und K₃. Während gemäß Fig. 5 die Werkzeugträger 14 kreisscheibenförmig sind, sind bei der Kreiselegge nach Fig. 6 die hier mit 14′ bezeichneten Werkzeugträger balkenförmig ausgebildet. Im Zusammenhang mit solchen balkenförmigen Werkzeugträgern 14′ würden bogenförmige Vorderkanten kaum Vorteile bringen.

Bei der Kreiselegge K₅ nach Fig. 7 sind Schilde 31 verwendet, die mittels Haltern 32 am Flansch 22 des Kastenbalkens 1 befestigt sind. Die Schilde haben einen vertikalen Teil 31a und einen geneigten Teil 31b. Die Vorderkante 33 kann bogenförmig ausgebildet sein.

Bei der Kreiselegge K₆ nach Fig. 8 sind Schilde 34 vorgesehen, die aus zwei Teilen 35, 36 zusammengeschweißt sind (Schweißnaht 37). Der Teil 35 ist winkelförmig ausgebildet und hat einen oberen Befestigungsabschnitt 35a und einen vertikalen Abschnitt 35b, der einen vertikalen Teil des Schildes bildet. Der Teil 36 hat einen U-förmigen Querschnitt mit einem unteren langen Schenkel 36a, einem oberen kürzeren Schenkel 36b und einem Steg 36c, an dem der Teil 36 mit dem Teil 35 verschweißt ist. Der Schenkel 36a bildet eine im wesentlichen horizontale Schutzwand. Die Vorderkante 38 ist wieder bogenförmig ausgebildet und an die kreisscheibenförmigen Werkzeugträger 14 angepaßt.

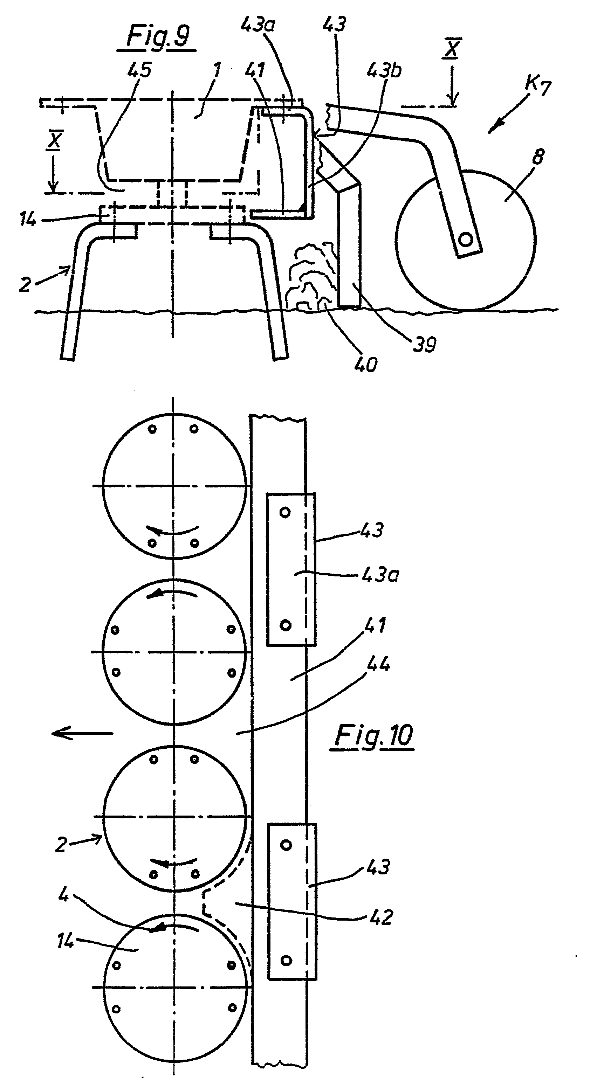

Die Kreiselegge K₇ unterscheidet sich von den bisher beschriebenen Kreiseleggen unter anderem dadurch, daß zwischen den Werkzeugkreiseln 2 und der Nachlaufwalze 8 eine Planierschiene 39 angeordnet ist. Die Planierschiene 39 schiebt bei der Arbeit der Kreiselegge K₇ einen Erdwall 40 vor sich her, wordurch die Gefahr, daß Steine zwischen die Werkzeugträger 14 eingezogen werden, besonders groß ist. Um nun das Eindringen von Steinen möglichst zu verhindern, ist eine horizontale Schutzwand 41 vorgesehen, die sich über die gesamte Breite der Maschine erstreckt. Wenn kreisscheibenförmige Werkzeugträger 14 verwendet werden, kann die Wand 41 zwickelartige Vorsprünge 42 aufweisen, wie dies in Fig. 10 gestrichelt dargestellt ist.

Die horizontale Schutzwand 41 wird von Schilden 43 getragen. Die Schilde 43 haben einen horizontalen Befestigungsteil 43a und einen vertikalen Abschirmungsteil 43b. Die Schutzwand 41 ist an die unteren Enden der vertikalen Schildteile 43b angeschweißt. Auch die Schilde 43 sind nur an solchen Stellen angeordnet, an denen die Kreisel 2 versuchen, Steine einzuziehen. Dies ist auch in Fig. 10 durch Drehrichtungspfeile 4 angedeutet.

Auch bei der Kreiselegge K₇ können Steine,die zwischen die Werkzeugträger 14 und in den Raum 23 zwischen dem Kastenbalken 1 und den Werkzeugträgern 14 eingedrungen sind, in den Bereichen 44 zwischen den Schilden 43 nach hinten ausgeschleudert werden.

## Patentansprüche

11. Kreiselegge (K₁ bis K₇) mit einem länglichen, sich quer zu Fahrtrichtung erstreckenden Gestell (1), in dem in einer Reihe Kreisel (2) gelagert sind, die aufrechtstehende Wellen (3) aufweisen, an denen Werkzeuge (12) tragende Werkzeugträger (14; 14′) befestigt sind, wobei benachbarte Kreisel (2) mit entgegengesetztem Drehsinn rotieren, einer Nachlaufwalze (8), die sich parallel zu der genannten Reihe erstreckt sowie einer Schutzwand, die zwischen den Kreiseln (2) und der Nachlaufwalze (8) angeordnet ist und die Werkzeugträger (14; 14′) abschirmt, dadurch gekennzeichnet, daß die Schutzwand in einzelne Schilde (15, 16, 17, 18; 27; 28; 29; 31; 34) aufgelöst ist, wobei die Schilde (15, 16, 17, 18; 27; 28; 29; 31; 34) die Nachbarschaftsbereiche nur solcher Kreisel (2b/2c, 2d/2e) abschirmen, in denen sich die Werkzeuge (12) nach vorne bewegen.

2. Kreiselegge nach Anspruch 1, dadurch gekennzeichnet, daß auch an den Enden der Kreiselreihe im Bereich zwischen den äußersten Kreiseln (2a, 2f) und diesen benachbarten Seitenabdeckungen (19, 20) Schilde (15, 18) (Außenschilde) angeordnet sind, zumindest dann, wenn sich die Werkzeuge (12) der äußeren Kreisel (2a, 2f) relativ zu den Seitenabdeckungen (19, 20) nach vorne bewegen.

3. Kreiselegge nach einem der vorhergehenden Ansprüche, dadurch gekennzeichnet, daß die Schilde in im wesentlichen horizontale oder schräg von hinten oben nach vorne unten verlaufende Schutzwände (15b; 28b; 29b; 31b; 36a; 41; 42) übergehen, die vorzugsweise kreisbogenförmige Ausnehmungen (16c, 16d; 33; 38) haben, die den vorzugsweise kreisscheibenförmig ausgebildeten Werkzeugträgern (14) eng benachbart sind.

4. Kreiselegge nach Anspruch 3, dadurch gekennzeichnet, daß die horizontalen Schutzwände eine zusammenhängende Schutzplatte (41) bilden, die sich über die gesamte Breite der Kreiselegge erstreckt.

5. Kreiselegge nach einem der vorhergehenden Ansprüche, dadurch gekennzeichnet, daß zwischen den Kreiseln (2) und der Nachlaufwalze (8) eine Planierschiene (39) angeordnet ist, insbesondere in Kombination mit einer zusammenhängenden Schutzplatte (41) nach Anspruch 4.

6. Kreiselegge nach einem der vorhergehenden Ansprüche, dadurch gekennzeichnet, daß die Breite (b) jedes Schildes (16, 17) im Bereich des 0,4 bis 1,5 fachen des Kreiselabstandes (a) liegt, vorzugsweise etwa gleich dem Kreiselabstand (a) ist.

7. Kreiselegge nach einem der vorhergehenden Ansprüche, dadurch gekennzeichnet, daß die Schilde in ihren unteren Bereichen breiter sind als in ihren oberen Bereichen.

8. Kreiselegge nach einem der vorhergehenden Ansprüche, bei der das längliche Gestell als Kastenbalken ausgebildet ist, der einen oberen Befestigungsflansch für die Befestigung eines Deckels aufweist, dadurch gekennzeichnet, daß die Schilde mit waagerechten Befestigungsschenkeln oder über winkelförmige Halter (21) mit dem Befestigungsflansch (22) verschraubt sind, vorzugsweise mit Schrauben, die auch zur Befestigung des Deckels (23) dienen.

## Revendications

1. Herse rotative (K₁ à K₇), comprenant un châssis (1) de forme allongée qui s'étend transversalement par rapport à la direction d'avancement, dans lequel est montée une rangée de rotors (2) présentant des arbres (3) dirigés vers le haut et auxquels sont fixés des porte-outils (14; 14`) portant des outils (12), – les rotors (2) qui sont voisins l'un de l'autre tournant dans des sens contraires –, et un rouleau suivant derrière ou rouleau suiveur (8) qui s'étend parallèlement à ladite rangée, ainsi qu'une paroi protectrice, laquelle est disposée entre les rotors (2) et le rouleau suiveur (8) et couvre les porte-outils (14; 14`), caractérisée en ce que la paroi protectrice est subdivisée en différents écrans (15, 16, 17, 18; 27; 28; 29; 31; 34), les écrans (15, 16, 17, 18; 27; 28; 29; 31; 34) ne protégeant que les régions voisines l'une de l'autre des rotors (2b/2c, 2d/3e) dans lesquelles les outils (12) se meuvent vers l'avant.

2. Herse rotative selon la revendication 1, caractérisée en ce qu'également, aux extrémités de la rangée de rotors, dans la région comprise entre les rotors les plus extérieurs (2a, 2f) et les protecteurs (19, 20) latéraux voisins de ces derniers, des écrans (extérieurs) (15, 18) sont disposés, tout au moins si les outils (12) des rotors extérieurs (2a, 2f) se meuvent vers l'avant par rapport aux protecteurs latéraux (19, 20).

3. Herse rotative selon l'une des revendications précédentes, caractérisée en ce que les écrans se raccordent à des parois protectrices (15b; 28b; 29b; 31b; 36a; 41; 42) sensiblement horizontales ou bien inclinées à partir de l'arrière et en haut vers l'avant et en bas, ces parois présentant des échancrures (16c, 16d; 33; 38), de préférence en forme d'arc de cercle, qui sont étroitement voisines des porte-outils (14) constitués de préférence sous forme de disques circulaires.

4. Herse rotative selon la revendication 3, caractérisée en ce que les parois protectrices horizontales forment une plaque protectrice (41) d'un seul tenant qui s'étend sur toute la largeur de la herse.

5. Herse rotative selon l'une des revendications précédentes, caractérisée en ce qu'une barre niveleuse (39) est disposée entre les rotors (2) et le rouleau suiveur (8), en particulier en combinaison avec une plaque protectrice (41) d'un seul tenant selon la revendication 4.

6. Herse rotative selon l'une des revendications précédentes, caractérisée en ce que la largeur (b) de chaque écran (16, 17) est comprise entre 0,4 à 1,5 fois l'écartement (a) des rotors et de préférence sensiblement égale audit écartement (a).

7. Herse rotative selon l'une des revendications précédentes, caractérisée en ce que les écrans sont plus larges dans leur région inférieure que dans leur région supérieure.

8. Herse rotative selon l'une des revendications précédentes et dans laquelle le châssis de forme allongée a la forme d'une poutre en caisson qui comporte une bride de fixation supérieure pour fixer un couvercle, caractérisé en ce que les écrans sont vissés à la bride de fixation (22) par des traverses de fixation horizontales ou par l'intermédiaire de cornières supports (21), de préférence au moyen de vis servant également à la fixation du couvercle (23).

## Claims

1. A rotary harrow (K1 to K7) comprising an elongate frame (1) which extends transversely to the direction of travel and in which rotary devices (2) are mounted in a row and comprise vertical shafts (3), to which frame tool supports (14; 14`) carrying tools (12) are secured adjacent rotary devices (2) rotating in opposite directions and comprising a follow-up roller (8), which extends parallel to the above-mentioned row, and a protective wall which is arranged between the rotary devices (2) and the follow-up roller (8) and covers the toole supports (14, 14`), characterised in that the protective wall is divided into individual plates (15, 16, 17, 18; 27; 28; 29; 31; 34), the plates (15, 16, 17, 18; 27; 28; 29; 31; 34) covering only the adjacent areas of those rotary devices (2b/2c, 2d/2e) in which the tools (12) move forwards.

2. A rotary harrow according to claim 1, characterised in that plates (15, 18) (outer plates) are also arranged at the ends of the rotary device row in the area between the outermost rotary devices (2a, 2f) and the adjacent lateral coverings (19, 20), at least in cases where the tools (12) of the outer rotary devices (2a, 2f) move forwards relative to the lateral coverings (19, 20).

3. A rotary harrow according to one ot the preceding claims, characterised in that the plates extend into protective walls (15b; 28b; 29b; 31b; 36a; 41; 42), which extend essentially horizontally or downwardly inclined from the rear to the front and which preferably comprise circular recesses (16c, 16d; 33; 38) which lie in the immediate vicinity of the preferably circular tool supports (14).

4. A rotary harrow according to claim 3, characterised in that the horizontal protective walls form a continuous protective plate (41) which extends over the entire width of the rotary harrow.

5. A rotary harrow according to any one of the preceding claims, characterised in that a levelling rail (39) is arranged between the rotary devices (2) and the follow-up roller (8), more particularly in combination with a continous protective plate (41) according to claim 4.

6. A rotary harrow according to any one ot the preceding claims, characterised in that the width (b) of each plate (16, 17) lies in the range of 0.4 to 1.5 times the distance (a) between the rotary devices, and is preferably equal to said distances (a).

7. A rotary harrow according to any one ot the preceding claims, characterised in that the plates are wider in their lower regions than in their upper regions.

8. A rotary harrow according to any one ot the preceding claims, in which the elongate frame is designed as a box beam, which comprises an upper securing flange for securing a cover, characterised in that the plates are screwed to the securing flange (22) with horizontal securing limbs or via angular securing plates (21), preferably by means of screws which are also used for securing the cover (23).

EP 0 261 269 B1

Fig.1

Fig.3

Fig.2

Fig. 4

Fig. 7

Fig. 5

Fig. 8

Fig. 6

_Fig.9_

_Fig.10_